# EUROPEAN PATENT APPLICATION

(11) **EP 2 028 708 A1**
(43) Date of publication of application: **25.02.2009**
(21) Application number: 07744447.9
(22) Date of filing: 24.05.2007
(51) Int. Cl.: H01M 8/04, B65D 1/00, B65D 25/48

(54) **FUEL CELL CARTRIDGE**

(30) Priority: 02.06.2006 JP 2006155140
(71) Applicant: Toyo Seikan Kaisha, Ltd., Tokyo 100-8522 (JP); Kabushiki Kaisha Toshiba, Minato-ku, Tokyo 105-8001 (JP)
(72) Inventor: TANAKA, Kenjiro, Yokohama-shi, Kanagawa 230-0001 (JP); IMODA, Daisuke, Yokohama-shi, Kanagawa 230-0001 (JP); HOSOKAI, Taku, Yokohama-shi, Kanagawa 230-0001 (JP); SAKAGUCHI, Toshiki, Yokohama-shi, Kanagawa 230-0001 (JP); KAI, Shojiro, Yokohama-shi, Kanagawa 230-0001 (JP); KAWAMURA, Koichi, Yokohamashi, Kanagawa 235-8522 (JP)
(74) Representative: Manley, Nicholas Michael
(86) International application number: PCT/JP2007/061036
(87) International publication number: WO 2007/142104

(57) **Abstract**

A fuel cell cartridge for containing fuel for fuel cells, comprising a polyester resin, wherein after the fuel is contained and preserved at 60°C for one week, a change of density at the bottom portion and the mouth portion is 0.01 g/cm³ or less. Even when methanol of a high concentration is contained, the fuel cell cartridge maintains excellent appearance effectively preventing the occurrence of whitening in the container and, particularly, at the mouth portion and the bottom portion thereof, and effectively suppressing a decrease in the shock resistance.

## Description

### Technical Field:

The present invention relates to a fuel cell cartridge for containing the fuel for fuel cells. More specifically, the invention relates to a fuel cell cartridge which suppresses the whitening when methanol of a high concentration which is a fuel is contained therein, and offers excellent appearance, shock resistance and squeeze performance.

### Background Art

Direct methanol type fuel cells (DMFCs) are now drawing attention as fuel cells for portable equipment, since they are capable of creating an electrochemical reaction by directly feeding methanol which is a fuel to an anode (fuel electrode) without using a reformer that is a device for taking out hydrogen, and are suited for realizing equipment in small sizes.

The DMFCs can roughly be divided into those of the active type and those of the passive type depending upon the type of feeding fuel. The DMFCs of the active type feed and circulate the fuel into the fuel cells by using a pump or the like and are capable of producing large electric power requiring, however, mechanical fuel feeding means such as a pump, and are disadvantageous from the standpoint of realizing equipment in small sizes.

The DMFCs of the passive type, on the other hand, feed the fuel by utilizing the convection or gradient of concentration using no mechanical fuel feeding means, and are most suited for realizing equipment in small sizes.

Further, the fuel is replenished to the fuel cells based on either the insert system by which the fuel tank itself is renewed or the satellite system by which the fuel is replenished to the incorporated fixed tank. The DMFCs of the passive type are usually based on the satellite system.

As the fuel cell cartridge of the satellite system used for the DMFCs of the passive type, JP-A-2005-317250 proposes a tubular fuel container obtained by extrusion-forming a material which does not permit the passage of gases but permit the passage of light ray, such as a polyvinyl alcohol, an ethylene/vinyl alcohol copolymer or a polyethylene terephthalate.

### Disclosure of the Invention:

In order to further decrease the size of the fuel cell cartridge used for the fuel cells for portable equipment, a fuel cell has been developed using methanol of a high concentration to decrease the volume of fuel, the fuel cell using pure methanol of a concentration of not lower than 90%.

When the methanol of a high concentration is contained in the small fuel cell cartridge formed by using a polyester resin as disclosed in the above prior patent document, however, the polyester resin tends to be whitened exhibiting poor appearance and decreased shock resistance, and can no longer be put into practical use.

The polyester resin, on the other hand, features excellent transparency and, when oriented and crystallized, exhibits excellent mechanical strength such as barrier property and shock resistance. It has, therefore, been desired to use the polyester resin for the fuel cell cartridge. The present applicant has already proposed in WO2006/054489 a fuel cell cartridge comprising the polyester resin without, however, still satisfying the requirement of preventing whitening when methanol of a high concentration is contained.

It is, therefore, an object of the present invention to provide a fuel cell cartridge comprising a polyester resin which, even when methanol of a high concentration is contained, maintains excellent appearance effectively preventing the whitening of the cartridge and, particularly, preventing the whitening at the mouth portion and the bottom portion of the cartridge, and effectively suppressing a decrease in the shock resistance.

According to the present invention, there is provided a fuel cell cartridge for containing fuel for fuel cells, wherein the cartridge comprises a polyester resin and has a mouth portion, a body portion and a bottom portion, and after the fuel is contained and preserved at 60°C for one week, a change of density at the bottom portion and the mouth portion is 0.01 g/cm³ or less.

In the fuel cell cartridge of the present invention, it is desired that:
1. The density is 1.345 g/cm³ or more at every portion of the cartridge;
2. The mouth portion is heat-crystallized, and the bottom portion inclusive of the central portion thereof is drawn or at least the central portion of the bottom is heat-crystallized;
3. The fuel is methanol of a concentration of 90% or more;
4. The fuel cell cartridge is formed by biaxially draw-blow-forming a preform of polyester into 1.5 to 3.5 times in the longitudinal direction and into 1.5 to 5.0 times in the circumferential direction with the preform size as a reference;
5. The biaxially draw-blow-forming is a two-step blow forming; and
6. The fuel cell cartridge has a connection portion equipped with a valve body for connection to the fuel-containing portion of the fuel cell body, and can be preferably used for containing methanol of a high concentration of, particularly, 90% or more.

According to the present invention, there is further provided a fuel cell cartridge by containing methanol of a concentration of 90% or more in the above fuel cell cartridge.

Even when methanol of a high concentration is contained, the fuel cell cartridge of the present invention is not whitened and is not, particularly, whitened at the mouth portion and the bottom portion of the cartridge maintaining excellent appearance and effectively preventing a decrease in the shock resistance that accompanies the whitening.

Further, the fuel cell cartridge of the invention is suppressed from being crystallized by methanol of a high concentration at the mouth portion of the cartridge, and is prevented from shrinking at the mouth portion that is caused by the crystallization, and features excellent dimensional stability at the mouth portion.

Further, despite of its small size, the fuel cell cartridge of the invention is drawn by the biaxial draw-blow-forming method to possess a decreased thickness. Even when squeezed, therefore, the fuel cell cartridge exhibits excellent squeeze performance without developing micro-cracks. Besides, the fuel cell cartridge has been draw-oriented to a high degree exhibiting excellent transparency, heat resistance and barrier property.

Moreover, the fuel cell cartridge exhibits excellent performance with its single-layer constitution of the polyester resin, offering advantage in productivity and in economy.

The fuel cell cartridge of the invention comprises a polyester resin and has a mouth portion, a body portion and a bottom portion, and an important feature resides in that after the fuel is contained and preserved at 60°C for one week, a change of density at the bottom portion and the mouth portion of the cartridge is 0.01 g/cm³ or less and that, even when methanol of a high concentration of 90% or more is contained, the change of density is not larger than the above value.

As described above, the conventional small (small-capacity) fuel cell cartridges were formed by extrusion-forming or injection-forming the polyester. When methanol of a high concentration was contained, however, the fuel cell cartridges were subject to be whitened.

The present inventors have discovered the fact that the above phenomenon was caused by the crystallization of the polyester that was accelerated by methanol of a high concentration contained therein and that the whitening phenomenon can be effectively suppressed even when methanol of a high concentration was contained, by having the whole cartridge crystallized in advance.

Namely, in the fuel cell cartridge of the present invention, every portion of the cartridge comprising the polyester resin has been crystallized in advance so as to possess a density of 1.345 g/cm³ or more, making it possible to suppress the occurrence of whitening even when methanol of a high concentration of 90% or more is contained.

In the present invention, a preform which has been heat-crystallized at the mouth portion thereof in advance is biaxially draw-blow-formed so that the mouth portion is heat-crystallized and the body portion and the bottom portion as a whole are oriented and crystallized by drawing. Further, even if a thick undrawn portion is formed in the central part of the bottom portion, the cartridge is formed in a state where the central part of the bottom portion is heat-crystallized by heating. Therefore, the degree of crystallinity larger than the above value is exhibited even by the portions under the neck that have not been heat-crystallized and that have been drawn only to a small degree. Namely, there is obtained a container that has been crystallized in every part thereof to be higher than the above crystal density. The body portion and the bottom portion that are drawn and oriented to a sufficient degree feature excellent transparency and exhibit excellent shock resistance.

Moreover, the polyester preform is biaxially draw-blow-formed so as to be drawn into 1.5 to 3.5 times in the longitudinal direction and into 1.5 to 5.0 times in the circumferential direction with the preform size as a reference. Therefore, despite of its small size and small capacity, the container has a thickness which is decreased to a sufficient degree and exhibits excellent squeeze performance.

Upon employing the two-step blow forming as the biaxial draw-blow forming, the container can be drawn and oriented to a more high degree to exhibit further improved shock resistance and a higher heat resistance owing to the heat-setting.

The above action and effect of the invention will also become obvious from the results of Examples appearing later.

That is, the fuel cell cartridge of the invention having a change of density of 0.01 g/cm³ at the bottom portion and the mouth portion after the fuel is contained and preserved at 60°C for one week, exhibits the same appearance as that of before the fuel was contained as well as excellent results concerning all of barrier property (amount of methanol permeation), shock resistance (falling strength) and squeeze performance (Examples 1 to 6). On the other hand, cartridges having a change of density which is not smaller than 0.01 g/cm³, such as a cartridge obtained by biaxially draw-blow-forming a preform that has not been crystallized at the mouth portion (Comparative Example 1) and a cartridge obtained by the injection blow-forming (Comparative Example 2), exhibit appearances different from the appearances of before containing the fuel, and fail to exhibit satisfactory results concerning all of barrier property, falling strength and squeeze performance (Comparative Examples 1 and 2).

### Brief Description of the Drawing:

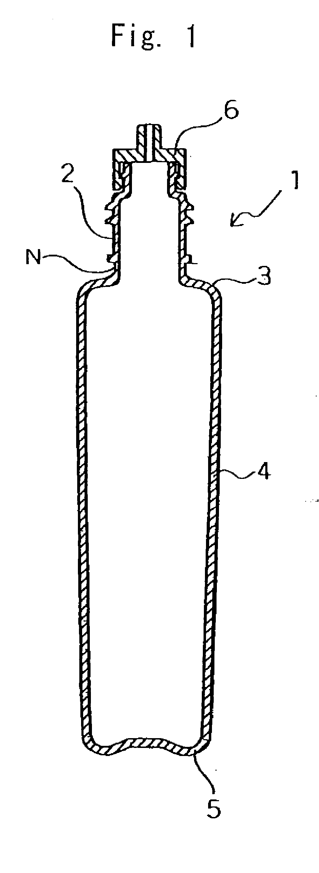

Fig. 1 is a side sectional view illustrating a fuel cell cartridge according to the present invention.

### Best Mode for Carrying Out the Invention:

### (Polyester Resin)

As the polyester resin used for the fuel cell cartridge of the present invention, there can be used any polyester resin that has heretofore been used for the polyester containers.

As the dicarboxylic acid component, it is desired that not less than 70% and, particularly, not less than 80% of the dicarboxylic acid component is a terephthalic acid from the standpoint of mechanical properties and heat properties. However, a carboxylic acid other than the terephthalic acid may be contained. As the carboxylic acid component other than the terephthalic acid, there can be exemplified isophthalic acid, naphthalenedicarboxylic acid, p-β-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid. When the main component is to be selected from those other than the terephthalic acid, the naphthalenedicarboxylic acid can be preferably used.

As the diol component, on the other hand, it is desired that not less than 70% and, particularly, not less than 80% thereof is the ethylene glycol from the standpoint of mechanical properties and heat properties. As the diol component other than the ethylene glycol, there can be exemplified 1,4-butanediol, propylene glycol, neopentyl glycol, 1,6-hexylene glycol, diethylene glycol, triethylene glycol, cyclohexane dimethanol, ethylene oxide adduct of bisphenol A, glycerol and trimethylolpropane.

Further, the diol component may contain trimellitic acid, pyromellitic acid, hemimellitic acid, 1,1,2,2-ethanetetracarboxlic acid, 1,1,2-ethanetricarboxylic acid, 1,3,5-pentanetricarboxylic acid, 1,2,3,4-cyclopentanetetracarboxylic acid, biphenyl-3,4,3',4'-tetracarboxylic acid, or trifunctional or more highly functional polybasic acid such as pentaerythritol, glycerol, trimethylolpropane, 1,2,6-hexanetriol or sorbitol, 1,1,4,4-tetrakis(hydroxymethyl)cyclohexane, and polyhydric alcohol.

In addition to the homopolymer or copolymer comprising the above-mentioned carboxylic acid and alcohol component, there can be further used a homopolymer or a copolymer obtained by the reaction of a hydroxycarboxylic acid such as polylactic acid. These polyesters can be used in a single kind or being blended in two or more kinds.

In the fuel cell cartridge of the present invention, it is particularly desired to use a polyester resin containing polyethylene terephthalate in an amount of not less than 70% by weight from the standpoint of shock resistance, heat resistance, transparency, methanol-barrier property, and economy.

The polyester resin used for the fuel cell cartridge of the present invention can be polymerized by a known method of polymerizing the polyester. Here, as the polymerization catalyst, it is desired to use, particularly, a Ti-type catalyst. Use of the Ti-type catalyst makes it possible to lower the amount of catalyst. Besides, Ti excellently stabilizes the compound and makes it possible to decrease the amount of catalyst that elutes out into the fuel which is the content.

Further, the polyester resin may be blended with known blending agents for resins, such as a coloring agent, an antioxidant, a stabilizer, various antistatic agents, a parting agent, a lubricant and a nucleating agent according to a known recipe in amounts in which they do not impair the quality of the finally formed article.

### (Preform)

According to the method of producing the fuel cell cartridge of the present invention, a preform can be formed by subjecting the above-mentioned polyester resin to a conventional production method such as injection-forming method or compression-forming method, and the preform that is formed is heated at its mouth portion so as to be heat-crystallized.

The preform used in the present invention may be of a single-layer structure of the above polyester resin or may be of a multi-layer structure using a known functional resin and any other thermoplastic resin, i.e., using the above polyester resin as at least the inner layer or the inner and outer layers, and using, as an intermediate layer, a gas-barrier resin, an oxygen-absorbing resin or an oxygen-absorbing gas-barrier resin.

### (Biaxially draw-blow forming)

The preform that is formed is heated at a drawing temperature prior to being subjected to the draw-blow forming. It is desired that the preform that is heated uniformly and at a high temperature is biaxially draw-blow formed by the conventional biaxially draw-blow-forming method into 1. 5 to 3.5 times in the longitudinal direction and into 1.5 to 5.0 times in the circumferential direction with the size of the preform as a reference. It is further desired that a ratio of the thickness of the body portion of the reform and the thickness of the body portion of the fuel cell cartridge of the invention which is the finally formed product, is in a range of 0.45 to 0.05 with the thickness of the body portion of the preform as a reference.

When the ordinary one-step blow-forming is employed, it is desired that the drawing ratio is 1.5 to 2.5 times in the longitudinal direction and is 1.5 to 4.5 times in the circumferential direction.

The preform that is formed by the injection-forming usually contains a thick gate portion that is formed at the central part in the bottom without being fully drawn. In this case, therefore, it is desired that the thick portion is heated so as to be thermally crystallized. For example, the thick central portion of the bottom is heated between the end of the drawing rod and the metal mold to thermally crystallize the above portion.

In forming the fuel cell cartridge of the present invention, further, it is desired that the thick gate portion is heat-set at a temperature of 150 to 230°C after the draw-blow forming from the standpoint of improving the heat resistance. The heat-set can be effected by known means, i.e., in a metal mold for blow-forming or in a metal mold for heat-setting separate from the metal mold for blow-forming.

It is desired that the fuel cell cartridge of the present invention has a high heat resistance since it is probable to be exposed to a temperature close to the boiling point of the fuel depending upon an environment in which it is used. It is, therefore, particularly desired that the biaxial draw-blow-forming method is a two-step blow-forming method.

The two-step blow-forming method comprises a primary blow-forming step of forming a secondarily formed article by primarily blow-forming the preform heated at the drawing temperature in a metal mold for primary blowing, a heat-shrinking step of obtaining a tertiary formed article by heat-shrinking at least the bottom portion of the secondarily formed article, and a secondary blow-forming step of secondarily blow-forming the tertiary formed article in a metal mold for secondary blowing. Since the draw-blow forming is conducted in two steps, it is made possible to attain the orientation to a high degree by effecting the drawing in large amounts through the primary blow-forming, to impart a high degree of crystallinity to the formed article since the heat-setting is effected at a high temperature after the blow-forming in the first step and the second step, and to decrease the residual distortion since the working rate has been suppressed in the second-step of blow-forming the bottle that has been heat-shrunk. As a result, a fuel cell cartridge having excellent heat resistance can be formed even by using an ordinary polyethylene terephthalate.

The two-step blow-forming method is capable of sufficiently drawing the preform inclusive of the central portion of the bottom. Therefore, the central portion of the bottom does not have to be necessarily heat-crystallized.

The two-step blow-forming can be conducted under known conditions. Preferably, however, it is desired that the drawing ratio in the primary blow-forming is 1.5 to 3.5 times in the longitudinal direction and 2.0 to 5.0 times in the circumferential direction, and the working ratio in the secondary blow-forming is such that a difference in volume between the container of the final shape and the heat-shrunk bottle is not larger than 20% of the volume of the final shape.

Further, the heat-treating conditions in the heat-shrinking step can be suitably selected, usually, from a temperature range of 150 to 220°C and a heating time in a range of 5 to 15 seconds though they may vary depending upon the kind of the polyester and the conditions of the primary blow-forming.

### (Fuel cell cartridge)

Fig. 1 is a side sectional view of a fuel cell cartridge of the present invention. The fuel cell cartridge of the invention generally designated at 1 comprises a mouth portion 2 which is heat-crystallized, a shoulder portion 3 continuous from the mouth portion 2 to a body portion 4, the body portion and a bottom portion 5, wherein the shoulder portion 3, body portion 4 and bottom portion 5 are oriented and crystallized.

A connection portion 6 having a valve body (not shown) is mounted on the mouth portion 2. The connection portion 6 is connected to a fuel-containing portion in the fuel cell body. Upon squeezing the body portion of the cartridge, the fuel in the cartridge can be fed into the fuel cell.

Usually, the fuel cell cartridge is used in a state of being fitted to the armoring member. However, the fuel cell cartridge of the present invention features excellent shock resistance, transparency, heat resistance and barrier property, and can be used alone without being fitted onto the armoring member.

It is desired that the fuel cell cartridge of the present invention is a small container which has a mouth diameter in a range of 8 to 28 mm, a content of not more than 200 ml and, particularly, in a range of 20 to 100 ml and, concretely, has a length of 50 to 150 mm in the longitudinal direction and a maximum diameter in the body portion of 25 to 80 mm. For better squeezing performance, further, it is desired that the body portion has a thickness which is as small as not more than 0.4 mm and, particularly, in a range of 0.35 to 0.15 mm.

As described earlier, the fuel cell cartridge of the present invention has a density of not less than 1.345 g/cm³ at every portion thereof. It is, however, desired that the fuel cell cartridge of the invention is so crystallized that a portion (portion N in Fig. 1) having the lowest crystallinity under the neck has a crystal density of not less than 1. 345 g/cm³, the heat-crystallized mouth portion has a crystal density in a range of 1.370 to 1.380 g/cm³, the body portion and the bottom portion (excluding the central portion of the bottom) that are oriented and crystallized to a high degree by the heat-setting have a crystal density in a range of 1.370 to 1.390 g/cm³, and that the central portion of the heat-crystallized bottom, too, has a crystal density in a range of 1.365 to 1.380 g/cm³.

The fuel cell cartridge of the invention maintains the above-mentioned excellent appearance and shock resistance even when methanol of a high concentration of not less than 90% is contained therein and can, therefore, be preferably used for containing methanol having such a high concentration. Here, however, there is no limitation on the kind of fuel that is to be contained, and there can be contained such liquid fuels as aqueous solution of methanol of a low concentration, dimethyl ether, aqueous solution of ethanol, formic acid, hydrazine and ammonia solution.

### EXAMPLES

### (Method of Evaluation)

### *Measurement of density.

Methanol of a concentration of 99% was filled and sealed in a cartridge, and was preserved under a temperature condition of 60°C for one week to examine the densities at the mouth portion, body portion and bottom portion thereof before and after the preservation.

### *Appearance.

50 Milliliters of methanol of a concentration of 99% was filled and sealed in the cartridge, and was preserved under a temperature condition of 60°C for one week to examine the occurrence of whitening by eyes.
○: Whitening has not occurred at all.
X: Whitening has occurred.

### *Falling test.

Cartridges filled with 50 ml of methanol of a concentration of 99% were fallen in an erected state (with the bottom portion downward) 10 times and were fallen in an up-side down state (with the mouth portion downward) 10 times from a height of 150 cm under a temperature condition of -15°C to examine the number of the cartridges that were broken (sample number was ten).

### *Amount of methanol permeation.

Methanol of a concentration of 99% was filled and sealed in a cartridge, and was preserved under a temperature condition of 60°C for one week to examine a difference in weight (g) before and after the preservation.

### (Examples 1, 5 and 6)

Preforms were formed by using forming materials shown in Table 1 and were heat-crystallized at the mouth portions and, as required, at the bottom portions. The polyethylene terephthalate (PET) used in Examples 1, 2, 4 to 6 and in Comparative Examples 1 and 2 were the PET polymerized by using a germanium-type catalyst.

The preforms were subjected to the one-step blow-forming (drawing ratios: 2.5 times in the longitudinal direction and 2.7 times in the circumferential direction, heat-setting condition: 160°C x 2 seconds) to form cartridges having a mouth diameter (outer diameter of the thread) of 18.6 mm, a capacity of 55 ml and a thickness of the body portion of 0.3 mm (ratio of the thickness thereof to the thickness of body portion of preform: 0.1).

The results were evaluated to be as shown in Table 1.

### (Examples 2 and 3)

Preforms were formed by using forming materials shown in Table 1 and were heat-crystallized at the mouth portions and, as required, at the bottom portions. The PET used in Example 3 was the one polymerized by using a titanium-type catalyst.

The preforms were subjected to the two-step blow-forming (drawing ratios in the primary blow-forming: 2.8 times in the longitudinal direction and 3.3 times in the circumferential direction, heating condition: 300°C x 10 seconds, working ratio in the secondary blow-forming (difference in volume between the container of the final shape and the heat-shrunk bottle) : 10%), to form cartridges having a mouth diameter (outer diameter of the thread) of 18.6 mm, a capacity of 55 ml and a thickness of the body portion of 0.3 mm (ratio of the thickness thereof to the thickness of body portion of preform: 0.1).

The drawing ratios were 2.5 times in the longitudinal direction and 2.7 times in the circumferential direction with the size of the preform to be formed into the container as a reference.

The results were evaluated to be as shown in Table 1.

### (Comparative Example 1)

A cartridge was formed in the same manner as in Example 1 but without heat-crystallizing the mouth portion and the bottom portion. The results were evaluated to be as shown in Table 1.

### (Comparative Example 2)

A cartridge having a mouth diameter (outer diameter of the thread) of 18.6 mm, a capacity of 55 ml and a thickness of the body portion of 0.45 mm was formed by using a forming material shown in Table 1. The results were evaluated to be as shown in Table 1.

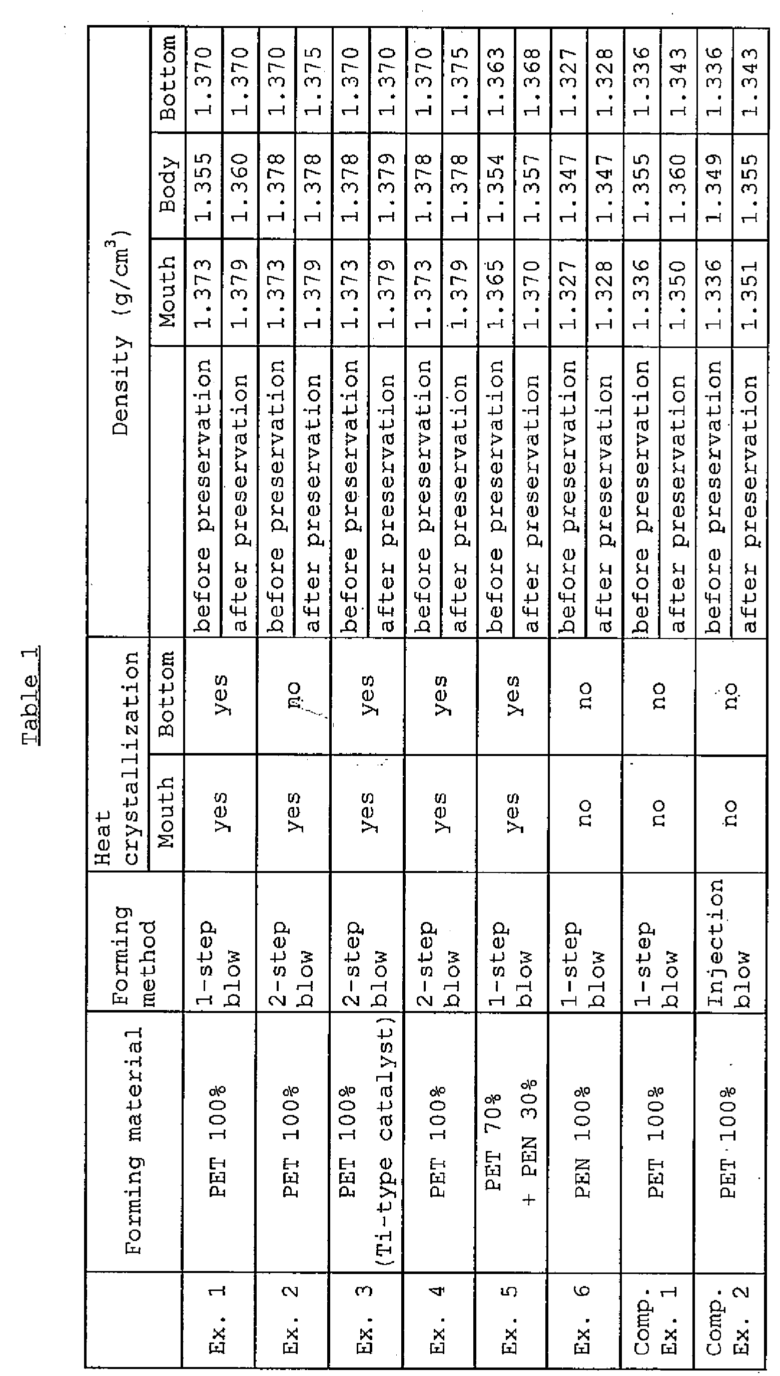

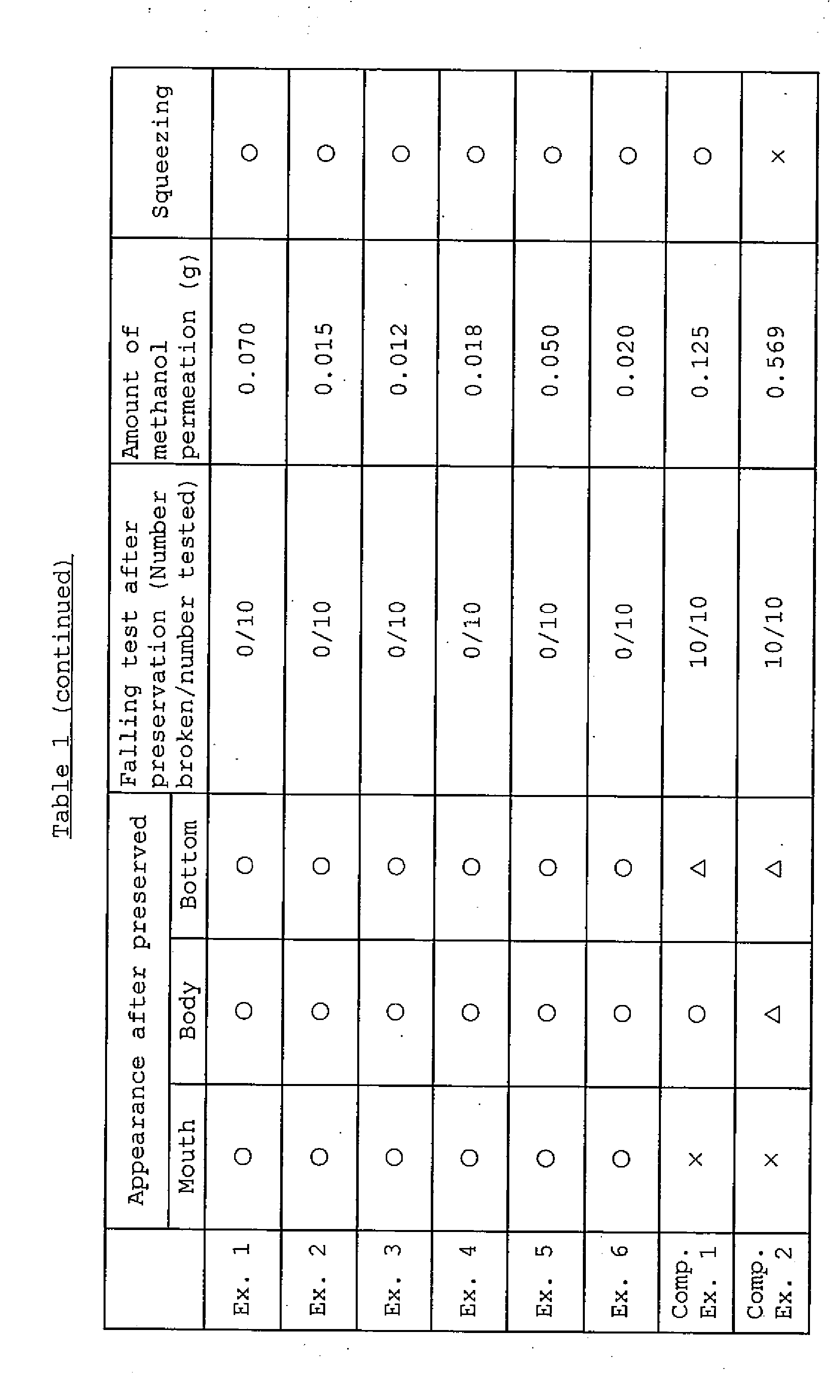

## Claims

1. A fuel cell cartridge for containing fuel for fuel cells, comprising a polyester resin and having a mouth portion, a body portion and a bottom portion, wherein after the fuel is contained and preserved at 60°C for one week, a change of density at the bottom portion and the mouth portion is 0.01 g/cm³ or less.

2. The fuel cell cartridge according to claim 1, wherein the cartridge has a density of not less than 1.345 g/cm³ at every portion thereof.

3. The fuel cell cartridge according to claim 1, wherein the mouth portion is heat-crystallized, and the bottom portion inclusive of the central portion thereof is drawn or at least the central portion of the bottom is heat-crystallized.

4. The fuel cell cartridge according to claim 1, wherein the fuel is methanol of a concentration of 90% or more.

5. The fuel cell cartridge according to claim 1, wherein the fuel cell cartridge is formed by biaxially draw-blow-forming a preform of polyester into 1. 5 to 3.5 times in the longitudinal direction and into 1.5 to 5.0 times in the circumferential direction with the preform size as a reference.

6. The fuel cell cartridge according to claim 5, wherein the biaxially draw-blow-forming is a two-step blow-forming.

7. The fuel cell cartridge according to claim 1, further having a connection portion equipped with a valve body for connection to a fuel-containing portion in a fuel cell body.

8. A fuel cell cartridge obtained by containing methanol of a concentration of 90% or more in the fuel cell cartridge of claim 1.
